## Europäisches Patentamt

## European Patent Office

## Office européen des brevets

(11) Veröffentlichungsnummer: **0 025 863**
**B1**

(12) # EUROPÄISCHE PATENTSCHRIFT

(45) Veröffentlichungstag der Patentschrift:
12.10.83

(51) Int. Cl.³: **C 23 F 11/14** // C02F5/12

(21) Anmeldenummer: **80104860.4**

(22) Anmeldetag: **16.08.80**

(54) **Verwendung von 1,2,4-Triazolderivaten als Korrosionsinhibitoren für Buntmetalle.**

(30) Priorität: **25.08.79 DE 2934461**

(43) Veröffentlichungstag der Anmeldung:
**01.04.81 Patentblatt 81/13**

(45) Bekanntmachung des Hinweises auf die Patenterteilung:
**12.10.83 Patentblatt 83/41**

(84) Benannte Vertragsstaaten:
**AT BE CH DE FR GB IT LI NL SE**

(56) Entgegenhaltungen:
**CH-A-495 434**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Gerhardt, Werner, Dr., Frans-Hals-Weg 7, D-4010 Hilden (DE)**
Erfinder: **Wehle, Volker, Dr., Beethovenstrasse 57, D-4010 Hilden (DE)**
Erfinder: **Syldatk, Andreas, Dr., Kohlhagenstrasse 44, D-4000 Düsseldorf (DE)**
Erfinder: **Rogall, Gabriele, Terniepenweg 88, D-4153 Neukirchen-Vluyn (DE)**
Erfinder: **Reiffert, Jürgen, Antwerpener Strasse 42, D-4200 Oberhausen (DE)**
Erfinder: **Conrad, Jens, Dr., Dürerweg 15, D-4010 Hilden (DE)**

## Verwendung von 1,2,4-Triazolderivaten als Korrosionsinhibitoren für Buntmetalle

Gegenstand der Erfindung ist die Verwendung von 3-Amino-5-alkyl-1,2,4-triazolen — im folgenden abgekürzt AAT — zur Verhinderung der Korrosion von Buntmetallen in wässrigen, insbesondere Brauchwassersystemen.

Buntmetalle, wie zum Beispiel Kupfer, Messing, Bronze und so weiter, sind aufgrund ihrer relativen Korrosionsbeständigkeit bevorzugte Werkstoffe bei der Konstruktion wasserführender Anlagen, wie zum Beispiel Dampferzeugungsanlagen, Heizsystemen, Kühlwasserkreisläufen und ähnlichen. Besondere Bedeutung haben diese Werkstoffe als Kondensationswerkstoff in Dampfkraftwerken. Trotz der relativ guten Beständigkeit gegen Korrosion ist es jedoch unvermeidbar, dass im Normalzustand analytisch fassbare Mengen von Kupfer in das umgebende Wasser abgegeben werden. Diese Kupferspuren zementieren auf nachgeschalteten Kühlwasserleitungen aus Stahl oder anderen unedlen Materialien und führen dort zu zum Teil verheerenden Lochfrasskorrosionen. Aus diesem Grunde ist eine zusätzliche Behandlung des mit den Buntmetallen in Berührung kommenden Wassers zur Verringerung dieser Kupferabgabe technisch wichtig. Es gibt in der Praxis nur sehr wenige Inhibitoren, die hierfür geeignet sind. Es handelt sich im wesentlichen um Mercaptobenzthiazol, Benzotriazol und Tolyltriazol. Diese Verbindungen zeigen relativ gute Wirksamkeit als Kupferinhibitoren, haben jedoch den entscheidenden Nachteil, dass sie chemisch relativ schwer zugänglich sind und dadurch aus wirtschaftlichen Gründen nur beschränkte Anwendung finden können. Ein weiterer Nachteil der genannten Verbindungen ist deren sehr schlechte Löslichkeit bei sauren pH-Werten, so dass eine praxisgerechte Konfektionierung dieser Produkte Schwierigkeiten bereitet.

Es wurde nun gefunden, dass man 3-Amino-5-alkyl-1,2,4-triazole als Korrosionsinhibitor für Buntmetalle in wässrigen Systemen im pH-Bereich von 6 bis 10 mit vorzüglichen Ergebnissen verwenden kann. Insbesondere sind Verbindungen geeignet, deren Alkylrest 2 bis 8, vorzugsweise 5 bis 7, C-Atome aufweist.

Dies is um so bemerkenswerter als andere, ähnlich aufgebaute Triazole korrosions-chemisch für die Praxis unbrauchbar sind oder auch überhaupt keinen Korrosionsschutz zeigen.

Es betrug der Korrosionsschutz bei einem Testversuch unter Zusatz von 0,3 ppm Triazol-Verbindung im Falle von 3-Amino-triazol-1H-1,2,4 sowie 5-Amino-1H-1,2,4-triazol-3-carbonsäure nur 50 beziehungsweise 40%, während bei dem gleichen Test unter Zusatz von 3-Amino-5-pentyl-1,2,4-triazol ein Wert von 88% erhalten wurde. 5-Methyl-benztriazol beziehungsweise Benztriazolyl-1-essigsäure zeigten praktisch überhaupt keinen Korrosionsschutz.

Die Mengen an ATT, die den wässrigen Systemen zweckmässigerweise zugegeben werden, liegen im Bereich von 0,5 bis 100 g/m³, vorzugsweise 1 bis 10 g/m³. Die Herstellung von ATT erfolgt nach an sich bekannten Methoden, beispielsweise durch Umsetzung von aliphatischen Carbonsäuren mit Aminoguanidin-hydrogencarbonat. Die Herstellung von ATT ist nicht Gegenstand der Erfindung.

In der Praxis spielt für das korrosive Verhalten eines wässrigen Systems beziehungsweise Brauchwassers in erheblichem Masse die Anwesenheit oder Entstehung von ablagerungsbildenden Trübstoffen, wie zum Beispiel Härteausfällungen, Tonsubstanzen und Eisenhydroxide, eine wesentliche Rolle. Durch Verhinderung dieser Ablagerungen wird das korrosive Verhalten eines Wassers weiterhin verbessert. Daher ist es im allgemeinen vorteilhaft, dem zu behandelnden Wasser ausser ATT weitere an sich bekannte Steinschutz- und Dispergiermittel zuzusetzen. Als geeignete Zusätze haben sich insbesondere Polyacrylate oder Acrylsäure-Methacrylsäurecopolymerisate mit einem Molgewicht von 500 bis 4000 oder Ethylenoxid-Propylenoxid-Blockpolymere mit einem Molgewicht von 500 bis 3000 und einem Ethylenoxid-Propylenoxidverhältnis von 10 : 90 bis 30 : 70 erwiesen.

Die oben angeführten Steinschutz- und Dispergiermittel werden bei Kombination mit ATT in Mengen von 1 bis 50 g/m³, vorzugsweise 3 bis 10 g/m³, verwendet.

Spielen die ökologischen Aspekte keine gravierende Rolle, wie insbesondere bei geschlossenen Kühlsystemen, so kann ATT auch mit Zinksalzen und/oder phosphorhaltigen Verbindungen kombiniert eingesetzt werden.

Als Zinksalze kommen insbesondere Zinkchlorid und Zinksulfat in Betracht. Dabei werden Mengen (berechnet als Zink) von 0,5 bis 10 g/m³, vorzugsweise 1 bis 4 g/m³, entsprechend einer Menge von 0,5 bis 10 beziehungsweise 1 bis 4 ppm verwendet.

Als phosphorhaltige Verbindungen kommen insbesondere komplexierende Phosphonsäuren, wie beispielsweise 1-Hydroxyethan-1,1-diphosphonsäure, Aminotrimethylenphosphonsäure und 2-Phosphonobutan-1,2,4-tricarbonsäure sowie deren wasserlösliche Salze oder Gemische dieser Verbindungen in Betracht. Durch eine derartige Kombination kann der Korrosionsschutz noch erheblich verstärkt werden.

### Beispiele

*Beispiel 1*

Die Bestimmung des korrosiven Verhaltens erfolgte nach der nachstehend beschriebenen Methode:

Je drei sorgfältig gereinigte Kupfertestbleche (75 × 12 × 1,5 mm) werden in ein 1-l-Becherglas, das mit 1 l Wasser und einer bestimmten Menge der zu untersuchenden Substanz gefüllt ist, bei Raumtemperatur 24 Stunden eingetaucht. Während der Versuchsdauer werden in einer Reihenordnung von insgesamt 10 Bechergläsern die wässrigen Lösungen mit 100 Umdrehungen pro Minute gerührt. Anschliessend wird mittels Atomabsorption der Cu-Gehalt im Wasser bestimmt.

Das als korrosives Medium benutzte Versuchswasser hatte folgende analytische Daten:

8° dH (Calciumhärte)
2° dH (Magnesiumhärte)
1° dH (Karbonathärte)
1000 ppm (Cl⁻)
8,2 (pH)

| Substanz | Dosierung (ppm) | Material des Testbleches | $\mu$g/Cu |
|---|---|---|---|
| — | — | Messing | 2010 |
| AAT* | 0,3 | » | 62 |
| Tolyltriazol | 0,3 | » | 117 |
| Mercaptobenz-thiazol | 0,5 | » | 126 |
| — | — | Kupfer | 892 |
| AAT* | 0,3 | » | 46 |
| Benzotriazol | 0,3 | » | 69 |

\* 3-Amino-5-heptyl-1,2,4-triazol

*Beispiel 2*

Ein technisches Kühlsystem mit einem Inhalt von 1,2 m³ und einer Umwälzung von 8 m³/h wird mit Düsseldorfer Stadtwasser betrieben. Die Verdampfungsverluste werden durch Frischwasserzugabe soweit ausgeglichen, dass der Salzgehalt nicht den 2fachen Wert des ursprünglichen Wertes übersteigt. Das System enthält einen Wärmetauscher aus Messing. Ohne jede Korrosionsschutzbehandlung des Kreislaufwassers stellt sich im System ein Kupfergehalt von 240 $\mu$g/l ein.

Bei Zugabe des erfindungsgemässen Korrosionsinhibitors (3-Amino-5-pentyl-1,2,4-triazol) in Mengen von 0,5 g/m³, bezogen auf das Kreislaufwasser, stellt sich ein Kupfergehalt von 40 $\mu$g/l ein. Dieser Wert ist als hervorragend anzusehen.

*Beispiel 3*

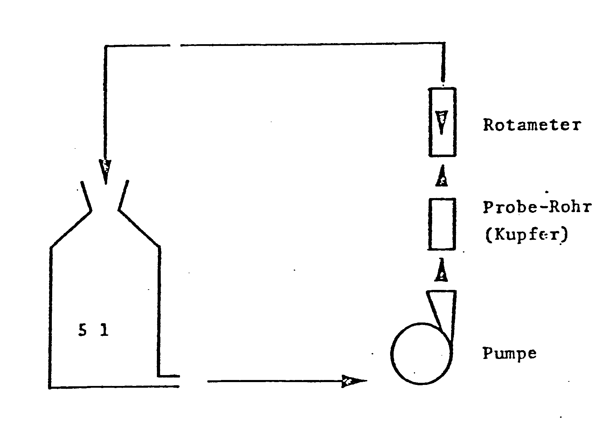

In einem Langzeitversuch über 4 Wochen wurde 3-Amino-5-heptyl-1,2,4-triazol mit anderen Inhibitoren zusammen eingesetzt und die Korrosionsraten an einem Kupferrohr bestimmt, indem unter jeweils gleichen Bedingungen das Testwasser durch eine Versuchsstrecke gemäss Figur 1 gepumpt wurde.

Die Versuchsbedingungen waren weiterhin folgende:

Wasserzusammensetzung:
8° dH (Calciumhärte)
2° dH (Magnesiumhärte)
1° dH (Karbonathärte)
500 mg/l (Cl⁻)
8,2 (pH)

Durchflussgeschwindigkeit:
1250 l/h entsprechend 1 m/s.

Versuchstemperatur:
Anfang: 15°C
Ende: 30°C

Täglich wurden 2 l Prüfwasser abgelassen und durch mit dem erfindungsgemässen Mittel behandelten Wasser nachgefüllt.

Dem Wasser wurde folgende Inhibitorkombination in einer Menge von 50 g/m³ zugegeben:

2,8% Hydroxyethandiphosphonsäure
20,0% Zinkchlorid
10,0% eines Dispergiermittels (niedermolekulare Copolymerisate aus Acrylsäure-methacrylsäure - Molgewicht: 1000)
0,7% 3-Amino-5-heptyl-1,2,4-triazol

Es stellte sich nach 14 Tagen im Wasser ein Kupfergehalt von 24 $\mu$g/l ein, ein als hervorragend anzusehender Wert.

Ein vergleichsweise durchgeführter Versuch, in dem das erfindungsgemässe Mittel durch das bekannte Mercaptobenzthiazol ersetzt wurde, ergab deutlich schlechtere, wenn auch technisch noch akzeptable Werte von 35 $\mu$g/l.

**Patentansprüche**

1. Verwendung von 3-Amino-5-alkyl-1,2,4-triazolen als Korrosionsinhibitoren für Buntmetalle in wässrigen Systemen im pH-Bereich von 6 bis 10.

2. Verwendung von Verbindungen nach Anspruch 1, dadurch gekennzeichnet, dass deren Alkylrest 5 bis 7 C-Atome enthält.

3. Verwendung von 3-Amino-5-alkyl-1,2,4-triazolen nach Anspruch 1, in einer Menge von 0,05 bis 10 g/m³, vorzugsweise 0,1 bis 0,5 g/m³.

4. Verwendung von 3-Amino-5-alkyl-1,2,4-triazolen nach Anspruch 1 bis 3 in Kombination mit zusätzlichen Steinschutz- und Dispergiermitteln, vorzugsweise auf Basis von Polyacrylaten beziehungsweise Acrylsäuremethacrylsäurecopolymerisaten oder Ethylenoxipropylenoxidblockpolymeren und/oder komplexierende Phosphonsäuren.

**Claims**

1. The use of 3-amino-5-alkyl-1,2,4-triazoles as corrosion inhibitors for nonferrous metals in aqueous systems in the pH-range from 6 to 10.

2. The use of compounds as claimed in Claim 1, characterized in that their alkyl radical contains from 5 to 7 C-atoms.

3. The use of 3-amino-5-alkyl-1,2,4-triazoles as claimed in Claim 1 in a quantity of from 0.05 to 10 g/m³ and preferably in a quantity of from 0.1 to 0.5 g/m³.

4. The use of 3-amino-5-alkyl-1,2,4-triazoles as claimed in Claims 1 to 3 in combination with additional concretion inhibitors and dispersants, preferably based on polyacrylates or acrylic acid-methacrylic acid copolymers or ethylene oxide-propylene oxide block polymers and/or complexing phosphonic acids.

**Revendications**

1. Utilisation de 3-amino-5-alcoyl-1,2,4-triazols comme inhibiteurs de corrosion pour métaux non-ferreux dans des systèmes aqueux dans l'intervalle de pH de 6 à 10.

2. Utilisation de composés selon la revendication 1, caractérisée en ce que leur radical alcoyle contient 5 à 7 atomes de carbone.

3. Utilisation de 3-amino-5-alcoyl-1,2,4-triazols selon la revendication 1 en une quantité de 0,05 à 10 g/m$^3$, de préférence de 0,1 à 0,5 g/m$^3$.

4. Utilisation de 3-amino-5-alcoyl-1,2,4-triazols selon les revendications 1 à 3 en combinaison avec des agents supplémentaires de protection de l'entartrage et de dispersion, de préférence à base de polyacrylates ou de copolymères acide acrylique/acide méthacrylique ou de polymères à blocs oxyde d'éthylène-oxyde de propylène et/ou d'acides phosphoniques complexeurs.

Rotameter

Probe-Rohr
(Kupfer)

Pumpe

5 1